# EUROPÄISCHE PATENTANMELDUNG

(11) **EP 0 845 756 A2**
(43) Veröffentlichungstag der Anmeldung: **03.06.1998**
(21) Anmeldenummer: 97120707.1
(22) Anmeldetag: 26.11.1997
(51) Int. Cl.: G06T 11/00

(54) **Verfahren zur Darstellung eines rapportierenden Musters und zugehörige Darstellungseinrichtung**

(30) Priorität: 27.11.1996 DE 19649058; 26.03.1997 DE 19712631
(71) Anmelder: EAT Elektronische Ateliertechnik Textil GmbH, D-47906 Kempen (DE)
(72) Erfinder: Aengenendt, Detlev, 47929 Grefrath (DE)
(74) Vertreter: Becker, Thomas, Dr., Dipl.-Ing.

(57) **Zusammenfassung**

Die Erfindung stellt ein Verfahren zur Darstellung eines rapportierenden Musters, etwa eines Gewebes, auf einem Bildanzeigegerät mit folgenden Schritten zur Verfügung: a) Darstellung des Rapports des Musters als Objekt einer auflösungsunabhängigen mathematischen Darstellung; b) Erzeugung zumindest einer Rapportzeile aus in einer ersten Richtung aneinander anschließenden Rapporten; c) Erzeugung zumindest einer Rapportspalte aus in einer zweiten, von der ersten verschiedenen Richtung aneinander anschließenden Rapporten; und d) Erzeugung eines Feldes aus Rapportzeilen und Rapportspalten in zumindest einer Rapportebene, und stellt eine entsprechende Darstellungseinrichtung zur Durchführung des Verfahrens zur Verfügung.

## Beschreibung

Die Erfindung betrifft ein Verfahren zur Darstellung eines rapportierenden Musters, z.B. des Musters eines Gewebes, und eine zugehörige Darstellungseinrichtung. Rapportierende Muster werden aus ästhetischen und/oder technischen Gründen auf vielen Gebieten verwendet, etwa in der Weberei, beim Textildruck, bei Mustertapeten, bei der Fliesenverlegung, usw. Bei der Darstellung des Musters eines Gewebes spielt als Grundeinheit des Musters der Rapport eine besonders wichtige Rolle; der Rapport ist die kleinste in sich geschlossene Bindungseinheit, die sich fortwährend in Kett- und Schußrichtung wiederholt, anders ausgedrückt der kleinste Abschnitt eines Musters, in dem keine Wiederholungen auftreten.

Wie beispielsweise aus "Die Weberei", E. Gräbner und A. Grote, Fachbuchverlag GmbH, Leipzig (1953), S. 140-142 und "Lexikon der Gewebe", T. Meyer Zur Capellen, Deutscher Fachverlag GmbH, Frankfurt/M (1996), S. 7-9, 27 hervorgeht, erfolgt seht langem und bis heute die Musterdarstellung in Form der sogenannten Bindungspatrone, nämlich einer zeichnerischen Darstellung einer Gewebebindung auf kariertem Spezialpapier, dem sogenannten Patronenpapier. Allerdings muß dieses an die jeweilige Gewebequalität (Anzahl Kett- und Schußfäden pro cm) angepaßt werden, da anderenfalls das in der Ware erscheinende Musterbild verzerrt ist, also nicht der Form auf der Patrone entspricht.

Beim Musterdesign ergeben sich daher in dieser Hinsicht erhebliche Schwierigkeiten: Die Darstellung von Hand auf Patronenpapier ist zeit- und damit kostenaufwendig, schon bei einer anderen Gewebequalität muß auf einem neuen Patronenpapier eine neue Darstellung des (unveränderten) Musters erfolgen, und Änderungen des Musters müssen jeweils völlig neu erstellt werden. Würde man versuchen, durch Einsatz der Datenverarbeitung derartige Probleme anzugehen, so könnte nur in der Hinsicht eine Vereinfachung erreicht werden, daß etwa das Patronenpapier durch ein entsprechendes Gitternetz auf einem Rechnermonitor ersetzt würde, die grundsätzlichen Probleme blieben jedoch bestehen, da die eigentliche Webvorlage als Pixelgrafik (Bitmap-Grafik) vorliegen muß, da hier die konkrete Gewebequalität (Kett- und Schußfadenanzahl pro cm) berücksichtigt werden muß.

Der Erfindung liegt daher die Aufgabe zugrunde, ein Verfahren und eine zugehörige Einrichtung zur Darstellung eines rapportierenden Musters, etwa eines Gewebes zur Verfügung zu stellen, die dem Musterdesigner eine schnellere und weniger aufwendige Musterdarstellung gestatten.

Die Aufgabe wird durch ein Verfahren nach Anspruch 1 bzw. eine zugehörige Einrichtung nach Anspruch 14 gelöst; vorteilhafte Ausgestaltungen der Erfindung sind in den Unteransprüchen angegeben.

Der Erfindung liegt die Erkenntnis zugrunde, auf der Grundlage des Rapports auf eine auflösungsunabhängige Darstellung des Musters überzugehen, und hiermit das Muster aufzubauen. Dann lassen sich infolge der auflösungsunabhängigen Darstellung Designvariationen schneller und einfacher durchführen.

Auf dem Gebiet des Desktop-Publishing ist es bereits an sich bekannt, mit einem Scanner ein Bild als Bitmap- oder Pixelgrafik (mit fester Auflösung) zu erzeugen und dann, da bei einer derartigen Darstellung bei einer Bildvergrößerung oder beim Druck mit hoher Auflösung Probleme wie etwa der sogenannte Treppeneffekt auftreten können, die Bitmap-Grafik in eine auflösungsunabhängige Vektorgrafik umzuwandeln, bei welcher die Objekte der Darstellung vektoriell charakterisiert werden. Dies erlaubt einfacheres Skalieren oder Rotieren der Grafik und erfordert weniger Speicherplatz im Rechner. Als Vektorgrafikprogramm ist beispielsweise CorelDRAW verfügbar, wobei dessen Modul CorelTRACE die Umwandlung von einer Bitmapin eine Vektorgrafik durchführt.

Bei dem erfindungsgemäßen Verfahren wird zunächst der Rapport als ein entsprechendes Objekt einer Vektorgrafik dargestellt und dann mit diesem Objekt das gesamte Muster aufgebaut. Hierzu werden zunächst aus aneinandergesetzten Rapporten Rapportzeilen und -spalten aufgebaut, die wiederum matrixartig ein Feld (Gesamtrapportebene) aufbauen.

Vorzugsweise sind die Rapportzeilen und -spalten rechtwinklig zueinander angeordnet (wie üblicherweise die Kett- und Schußfäden).

Für den Musterdesigner ergeben sich vielfältige Gestaltungsmöglichkeiten, aufgrund der auflösungsunabhängigen (und damit etwa von der Gewebequalität unabhängigen) Darstellung. So können beispielsweise Rapportzeilen und/oder -spalten gegenüber anderen Rapportzeilen bzw. -spalten einen Versatz aufweisen, in beliebiger Größe. Weiterhin kann die Orientierung eines oder mehrerer Rapporte gegenüber anderen Rapporten geändert werden, etwa gedreht, gespiegelt, gestürzt, oder gestülpt angeordnet sein. Weist das Feld mehrere, übereinandergelagerte Rapportebenen auf, wobei im Feld, also der Gesamtrapportebene, die Rapporte (Objekte) überlagert sind, so wird die Vielfalt der Designmöglichkeiten nochmals erheblich gesteigert. In jeder der Rapportebenen können einzelne oder mehrere Rapporte, Rapportzeilen und/oder -spalten im Design geändert werden, und das Ergebnis kann praktisch sofort auf einer geeigneten Anzeigevorrichtung vom Designer als Feld, also Gesamtrapportebene, betrachtet werden. Zu den Gestaltungsmöglichkeiten gehört hierbei auch der Einsatz unterschiedlicher Farben.

Vorzugsweise erfolgt z.B bei Geweben dann, wenn der Designvorgang beendet ist, eine Umwandlung der Vektorgrafik in eine Pixel- oder Bitmapgrafik, die dann die eigentliche Vorlage (Webvorlage) bildet. Hier geht dann die Gewebequalität im voranstehend angegeben Sinn ein.

Als Darstellungseinrichtung zur Durchführung des erfindungsgemäßen Verfahrens dient vorzugsweise ein grafikfähiger Rechner, etwa ein entsprechend leistungsfähiger PC oder eine Workstation, mit einer entsprechenden grafikfähigen Anzeigevorrichtung, etwa einem Grafikbildschirmmonitor, und zugehörigen Peripheriegeräten.

Die Erfindung wird nachstehend anhand zeichnerisch dargestellter Ausführungsbeispiele näher erläutert, aus denen sich weitere Vorteile und Merkmale ergeben. Es zeigt:
- Fig. 1: mehrere Rapportebenen 1, 2, ..., n in Perspektivdarstellung, die jeweils aus Rapportzeilen und -spalten bestehen und einander überlagert sind, mit Beispielen für Versatz und verschiedene Orientierungen;
- Fig. 2: ein Beispiel für ein Muster (Buchstabe A) als Vektorgrafik als Grundlage für eine Pixeldarstellung in zwei verschiedenen Gewebequalitäten; und
- Fig. 3: ein schematisches Blockschaltbild eines Rechners mit Peripheriegeräten zur Durchführung des erfindungsgemäßen Verfahrens.

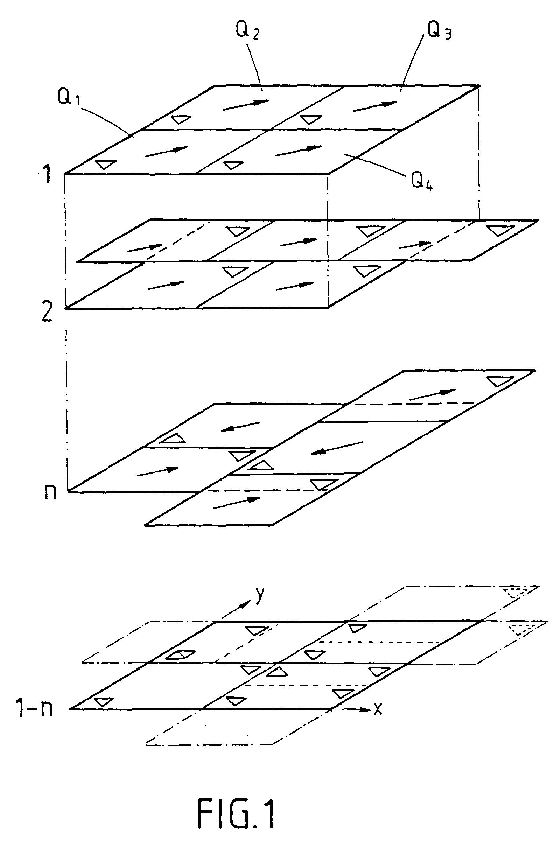

Fig. 1 zeigt oben eine erste Rapportebene 1, die aus Rapporten Q1 bis Q4 besteht, die jeweils als Vektorgrafikobjekt vorliegen. Rapportzeilen Q1-Q4 und Q2-Q3 sowie Rapportspalten Q1-Q2 und Q4-Q3, die in X- bzw. Y-Richtung (unten in Fig. 1 angegeben) verlaufen, weisen in der Rapportebene 1 eine normale Musterlage auf, wie durch ein Dreieck in jedem Rapport Q1 bis Q4 angedeutet ist.

In der unter der Rapportebene 1 angeordneten Rapportebene 2 werden dieselben Rapporte wie in der darüberliegenden Rapportebene 1 verwendet, wobei allerdings die obere Rapportzeile Q2-Q3 gegenüber der unteren Q1-Q4 einen Versatz (um 1/2, bezogen auf den Rapport) aufweist.

In der nächsten in Fig. 1 gezeigten Rapportebene "n" ist ein Versatz der rechten Rapportspalte Q4-Q3 gegenüber der linken Rapportspalte Q1-Q2 vorhanden, wiederum um den Wert 1/2. Darüber hinaus sind in dieser Rapportebene "n", im Vergleich zur normalen Musterlage in der Rapportebene 1, einige Rapporte anders orientiert angeordnet, nämlich im Rapport Q2 und Q4 gedreht/gestülpt.

Das unten in Fig. 1 dargestellte Feld, die Gesamtrapportebene, verdeutlicht, welches resultierende Muster aus der Überlagerung der Rapportebenen 1, 2, ..., n entsteht.

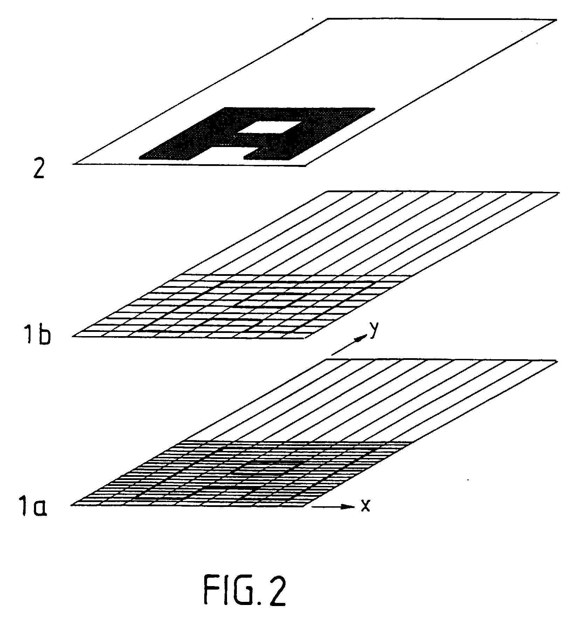

Fig. 2 zeigt als Musterobjekt einen Buchstaben "A" in Vektorgrafikdarstellung. Die Ebenen 1a, 1b verdeutlichen verschiedene Gewebequalitäten, nämlich in Ebene 1a 20 Schuß- und 10 Kettfäden, dagegen in Ebene 1b jeweils 10 Schuß- und Kettfäden pro cm in der dargestellten Orientierung. Das Muster ("A") bleibt in beiden Ebenen 1a, 1b trotz der geänderten Gewebequalität unverändert.

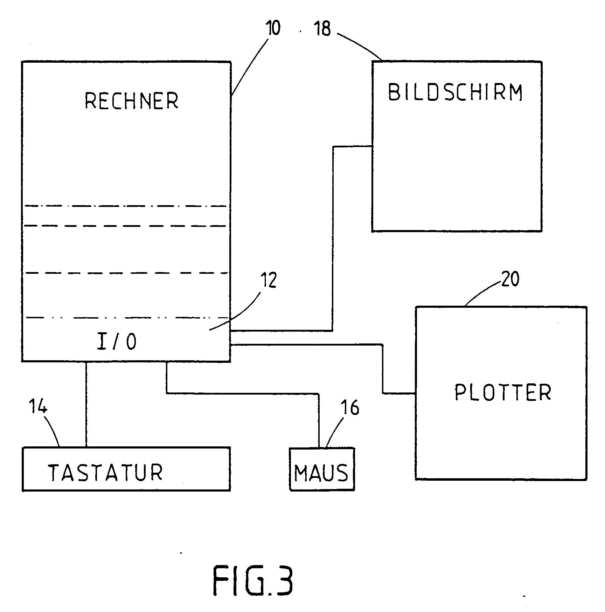

Fig. 3 verdeutlicht schematisch stark vereinfacht ein Rechnersystem zur Durchführung des erfindungsgemäßen Verfahrens. Ein Rechner (grafikfähig) 10 ist über seine Ein/Ausgabeeinheit (I/O) 12 mit einer Tastatur 14 und einer Maus 16 als Eingabegeräte verbunden. Die Grafikdarstellung erfolgt wahlweise, durch den Benutzer steuerbar, auf einem Bildschirm oder einem Plotter 18 bzw. 20. Statt des Plotters kann auch ein Grafikdrucker verwendet werden. Grafikfähige Rechner und Anzeigegeräte sind als ausreichend schnelle und genügende Speicherfähigkeit aufweisende PCs, Workstations oder CAD-Rechner verfügbar und vorzugsweise für die Verwendung im Rahmen der vorliegenden Erfindung farbtauglich ausgebildet.

## Patentansprüche

1. Verfahren zur Darstellung eines rapportierenden Musters auf einem Bildanzeigegerät mit folgenden Schritten:
a) Darstellung des Rapports (Q1) des Musters als Objekt einer auflösungsunabhängigen mathematischen Darstellung;
b) Erzeugung zumindest einer Rapportzeile (Q1-Q4) aus in einer ersten Richtung (X) aneinander anschließenden Rapporten (Q1, Q4);
c) Erzeugung zumindest einer Rapportspalte (Q1-Q2) aus in einer zweiten, von der ersten verschiedenen Richtung (Y) aneinander anschließenden Rapporten (Q1, Q2); und
d) Erzeugung eines Feldes (Q1, Q2, Q3, Q4) aus Rapportzeilen (Q1-Q4, Q2-Q3) und Rapportspalten (Q1-Q2, Q4-Q3) in zumindest einer Rapportebene.

2. Verfahren nach Anspruch 1, dadurch gekennzeichnet, daß die auflösungsunabhängige mathematische Darstellung eine Vektorgrafik-Darstellung ist.

3. Verfahren nach Anspruch 1 oder 2, dadurch gekennzeichnet, daß die Rapportzeilen (Q1-Q4, Q2-Q3) und die Rapportspalten (Q1-Q2, Q4-Q3) in rechtem Winkel zueinander angeordnet sind.

4. Verfahren nach einem der Ansprüche 1 bis 3, dadurch gekennzeichnet, daß zumindest eine Rapportzeile gegenüber einer Basisrapportzeile um einen Versatz in der ersten Richtung (X) verschoben ist.

5. Verfahren nach einem der Ansprüche 1 bis 4, dadurch gekennzeichnet, daß zumindest eine Rapportspalte gegenüber einer Basisrapportspalte um einen Versatz in der zweiten Richtung (Y) verschoben ist.

6. Verfahren nach einem der Ansprüche 1 bis 5, dadurch gekennzeichnet, daß sämtliche Rapporte dieselbe Orientierung aufweisen.

7. Verfahren nach einem der Ansprüche 1 bis 5, dadurch gekennzeichnet, daß zumindest in einer Rapportzeile und/oder Rapportspalte zumindest ein Rapport eine andere Orientierung aufweist als die übrigen Rapporte.

8. Verfahren nach Anspruch 7, dadurch gekennzeichnet, daß der zumindest eine Rapport gegenüber den übrigen Rapporten gedreht und/oder gespiegelt und/oder gestürzt und/oder gestülpt angeordnet ist.

9. Verfahren nach einem der Ansprüche 1 bis 8, dadurch gekennzeichnet, daß das Feld zwei oder mehr einander überlagerte Rapportebenen (1, 2, ..., n; n positive ganze Zahl) aufweist.

10. Verfahren nach Anspruch 9, dadurch gekennzeichnet, daß zumindest zwei Rapportebenen eine unterschiedliche Charakteristik, beispielsweise Farbe, aufweisen.

11. Verfahren nach einem der Ansprüche 1 bis 10, dadurch gekennzeichnet, daß die auflösungsunabhängige Darstellung in eine auflösungsabhängige Darstellung umgewandelt wird.

12. Verfahren nach Anspruch 11, dadurch gekennzeichnet, daß die auflösungsabhängige Darstellung eine Pixeldarstellung ist.

13. Verfahren nach Anspruch 11 oder 12, dadurch gekennzeichnet, daß in jedem Rapport eine Gewebequalität als Anzahl von in der ersten Richtung (X) verlaufenden Kettfäden pro Längeneinheit und als Anzahl von in der zweiten Richtung (Y) verlaufenden Schußfäden pro Längeneinheit festgelegt wird, die unterschiedlich sein können.

14. Darstellungseinrichtung zur Durchführung des Verfahrens nach einem der Ansprüche 1 bis 13, mit einem grafikfähigen Rechner (10) mit Einrichtungen, die zur Verarbeitung eines Grafikprogramms mit einer auflösungsunabhängigen mathematischen Darstellung von Grafikobjekten ausgebildet sind, und mit einer grafikfähigen Anzeigevorrichtung (18).

15. Darstellungsvorrichtung nach Anspruch 14, dadurch gekennzeichnet, daß die Anzeigevorrichtung ein grafikfähiger Monitorbildschirm (18) ist.
